# EUROPEAN PATENT APPLICATION

(11) **EP 3 896 763 A1**
(43) Date of publication of application: **20.10.2021**
(21) Application number: 19894710.3
(22) Date of filing: 25.11.2019
(51) Int. Cl.: H01M 4/66

(54) **LITHIUM ION BATTERY**

(30) Priority: 14.12.2018 CN 201811533771; 24.12.2018 CN 201811583234
(71) Applicant: Contemporary Amperex Technology Co., Limited, Jiaocheng District Ningde Fujian 352100 (CN)
(72) Inventor: GUO, Mingkui, Ningde, Fujian 352100 (CN); WANG, Yaohui, Ningde, Fujian 352100 (CN); HUANG, Yaping, Ningde, Fujian 352100 (CN)
(74) Representative: Beckmann, Claus
(86) International application number: PCT/CN2019/120541
(87) International publication number: WO 2020/119431

(57) **Abstract**

The present invention relates to the field of electrochemistry, and in particular, to a lithium-ion battery and a preparation method thereof. The present invention provides a lithium-ion battery, including a positive electrode plate and a negative electrode plate, where the positive electrode plate includes a positive electrode current collector and a positive electrode active substance layer on at least one surface of the positive electrode current collector, the negative electrode plate includes a negative electrode current collector and a negative electrode active substance layer on at least one surface of the negative electrode current collector, a binder in the positive electrode active substance layer is uniformly distributed in a thickness direction of the active substance layer, and a binder in the negative electrode active substance layer is uniformly distributed in a thickness direction of the active substance layer. In the present invention, the active substance is coated by a binder before being applied as a coat to make an electrode, preventing the binder from floating up with solvent volatilization, and improving power and cycling. When this method is applied to a system with a high weight per unit area of active substance, power and cycling deterioration caused by an increase in thickness of the electrode plate can be effectively alleviated.

## Description

### TECHNICAL FIELD

The present invention relates to the field of electrochemistry, and in particular, to a lithium-ion battery and a preparation method thereof.

### BACKGROUND

With application and promotion of traction batteries in electric vehicles, energy density of battery cells has received growing attention and challenges. In efforts to continuously improve and increase energy density, the most effective solution in current available systems is to increase weight per unit area of active substance at a cathode (with an increase rate greater than or equal to 40%), so as to greatly reduce usage amounts of current collector substrates and separator substrates, and use the saved space to increase the energy density. However, after the weight per unit area of active substance is increased, various problems occur. For example, in processes, after an electrode plate is coated and dried, serious cracking occurs due to increased stress, and this greatly hinders application of active substances with a high weight per unit area (greater than or equal to 360 mg/1540.25 mm²) at the cathode, restricting an increase amount of the energy density of battery cells. In performance, the increase in the weight per unit area of active substance lengthens a transmission path of the electrode, deteriorating power and cycling.

### SUMMARY

In view of the foregoing shortcomings of the prior art, the objectives of the present invention are to provide a lithium-ion battery and a preparation method thereof to resolve the problems in the prior art.

To achieve the foregoing and other related objectives, an aspect of the present invention provides a lithium-ion battery, including a positive electrode plate and a negative electrode plate, where the positive electrode plate includes a current collector and a positive electrode active substance layer on at least one surface of the current collector, the negative electrode plate includes a current collector and a negative electrode active substance layer on at least one surface of the current collector, a binder in the positive electrode active substance layer is uniformly distributed in a thickness direction of the active substance layer, and a weight per unit area of active substance of the positive electrode active substance layer is 360 mg/1540.25 mm² or more.

Another aspect of the present invention provides a lithium-ion battery, including a positive electrode plate and a negative electrode plate, where the positive electrode plate includes a positive electrode current collector and a positive electrode active substance layer on at least one surface of the positive electrode current collector, the negative electrode plate includes a negative electrode current collector and a negative electrode active substance layer on at least one surface of the negative electrode current collector, a binder in the negative electrode active substance layer is uniformly distributed in a thickness direction of the active substance layer, and a weight per unit area of active substance of the negative electrode active substance layer is 180 mg/1540.25 mm² or more.

Another aspect of the present invention provides a method for preparing a lithium-ion battery, including at least one or more of the following steps:
(a) providing a positive electrode active substance uniformly coated with a binder; and
(b) providing a negative electrode active substance uniformly coated with a binder.

Compared with the prior art, the present invention has the following beneficial effects:

In the present invention, the active substance is coated by the binder before being applied as a coat to make an electrode, preventing the binder from floating up with solvent volatilization, and improving the power and cycling of battery. When this method is applied to a system with a high weight per unit area of active substance (greater than or equal to 360 mg/1540.25 mm² at a cathode, and greater than or equal to 180 mg/1540.25 mm² at an anode), power and cycling deterioration caused by an increase in thickness of the electrode plate can be effectively alleviated.

### DESCRIPTION OF EMBODIMENTS

The lithium-ion battery and the preparation method thereof according to the present invention are described in detail below.

A first aspect of the present invention provides a lithium-ion battery, including a positive electrode plate and a negative electrode plate, where the positive electrode plate includes a positive electrode current collector and a positive electrode active substance layer on at least one surface of the positive electrode current collector, and the negative electrode plate includes a negative electrode current collector and a negative electrode active substance layer on at least one surface of the negative electrode current collector. In the lithium-ion battery, the positive electrode active substance layer contains a binder, the binder in the positive electrode active substance layer is uniformly distributed in a thickness direction of the active substance layer, and a weight per unit area of active substance of the positive electrode active substance layer is 360 mg/1540.25 mm² or more; and/or, the negative electrode active substance layer contains a binder, the binder in the negative electrode active substance layer is uniformly distributed in a thickness direction of the active substance layer, and a weight per unit area of active substance of the negative electrode active substance layer is 180 mg/1540.25 mm² or more. The positive electrode active substance layer and/or the negative electrode active substance layer may usually be a layer whose thickness direction is usually perpendicular to an extending direction of the layer. That the binder is uniformly distributed in the thickness direction of the active substance layer usually means that basically the same percentage of binder content is present in the thickness direction of the active substance layer. Specifically, a change rate of the binder content in the active substance layer in the thickness direction is less than or equal to 150%, 140%, 130%, 120%, or 110%. The change rate may be calculated by using the following formula: Change rate=(Binder content in an active substance on a side further from a current collector layer/Binder content in an active substance layer on a side closer to the current collector layer)^{∗} 100%. The binder is a light component in a coating process, and therefore the foregoing formula can reflect whether the binder is uniformly distributed in the active substance layer. In the lithium-ion battery provided in the present invention, the positive electrode plate and/or the negative electrode plate may be a system with a high weight per unit area of active substance. For example, the weight per unit area of active substance of the positive electrode active substance layer may be greater than or equal to 320 mg/1540.25 mm², 340 mg/1540.25 mm², 360 mg/1540.25 mm², 380 mg/1540.25 mm², or 400 mg/1540.25 mm². For another example, the weight per unit area of active substance of the negative electrode active substance layer may be greater than or equal to 140 mg/1540.25 mm², 160 mg/1540.25 mm², 180 mg/1540.25 mm², 200 mg/1540.25 mm², or 220 mg/1540.25 mm². The active substance is coated by the binder before being applied as a coat to make an electrode, preventing a light component (for example, the binder) from floating up with the solvent volatilization, and a heavy component (for example, the active substance) from sinking during coating, so as to improve power and cycling of the electrode. Especially, when this method is applied to an electrode made of a system with a high weight per unit area of active substance, power and cycling deterioration caused by an increase in thickness of an electrode plate can be effectively alleviated.

In the lithium-ion battery provided by the present invention, cohesion of the positive electrode active substance layer may be 30 N/m to 50 N/m, 35 N/m to 45 N/m, 30 N/m to 35 N/m, 35 N/m to 40 N/m, 40 N/m to 45 N /m, or 45 N/m to 50 N/m. For a method for representing the cohesion of the active substance layer, reference may be made to the examples of the present invention. Cohesion of the negative electrode active substance layer may be 40 N/m to 60 N/m, 45 N/m to 55 N/m, 40 N/m to 45 N/m, 45 N/m to 50 N/m, 50 N/m to 55 N/m, or 55 N/m to 60 N/m. A value of cohesion of an active substance layer usually affects adhesion between particles of the active substance layer, mainly depending on a binder type and amount. Excessive cohesion may lead to an increase in the amount of binder required, cause the active substance to easily agglomerate, and leave the coating process prone to particle scratching and other production problems. In addition, an excessively high binder content may also increase diffusion resistance of ions of an electrode and deteriorate power performance of a battery cell. Excessively low cohesion of the active substance layer may cause poor adhesion between particles, and production problems such as easy powder shedding in a production process, deteriorating performance (such as capacity, power, and cycling) of the battery cell.

In the lithium-ion battery provided in the present invention, the positive electrode active substance layer may be of a single-layer structure or a multi-layer structure. At least some of the binder in the positive electrode active substance layer is uniformly distributed in the thickness direction of the positive electrode active substance layer. When the positive electrode active substance layer is of a multi-layer structure, the layers may have a same percentage of binder content or different percentages of binder content, and the layers may have a same type of binder or different types of binders. In a specific embodiment of the present invention, when the positive electrode active substance layer is of a multi-layer structure, at least some of the layers have a same binder content, and preferably, all the layers have a same binder content. In another specific embodiment of the present invention, when the positive electrode active substance layer is of a multi-layer structure, at least some of the layers have a same type of binder, and preferably, all the layers have a same type of binder.

In the lithium-ion battery provided in the present invention, the negative electrode active substance layer may be of a single-layer structure or a multi-layer structure. At least some of the binder in the negative electrode active substance layer is uniformly distributed in the thickness direction of the negative electrode active substance layer. When the negative electrode active substance layer is of a multi-layer structure, the layers may have same a same percentage of binder content or different percentages of binder content, and the layers may have a same type of binder or different types of binders. In a specific embodiment of the present invention, when the negative electrode active substance layer is of a multi-layer structure, at least some of the layers have a same binder content, and preferably, all the layers have a same binder content. In another specific embodiment of the present invention, when the negative electrode active substance layer is of a multi-layer structure, at least some of the layers have a same type of binder, and preferably, all the layers have a same type of binder.

Considering that in the lithium-ion battery provided in the present invention, the binder in the active substance layer is uniformly distributed in the thickness direction of the active substance layer. Preferably, all positive electrode active substance layers and/or all negative electrode active substance layers have a same binder content, otherwise, the binder may be unevenly distributed on the electrode, and power performance and cycling performance of the battery cell deteriorate. In addition, considering that different binders have different properties (for example, molecular weight and intrinsic binding force) that affect ion diffusion capacity of the binders, preferably, all positive electrode active substance layers and/or negative electrode active substance layers have the same binder.

In the lithium-ion battery provided in the present invention, the binder can usually be matched with the active substance. For example, the binder may be applied on the surface of particles of the active substance to form a binder coating layer. Those skilled in the art can select a suitable binder suitable for the present invention. For example, the binder used in the positive electrode active substance layer may include but is not limited to a combination of one or more of polyvinyl alcohol, polyurethane, polyacrylate, polyvinylidene fluoride, styrene-butadiene rubber, epoxy resin, vinyl acetate resin, and chlorinated rubber. For another example, the binder used in the negative electrode active substance layer may usually be a type of binder containing methyl, carboxyl, carbonyl, nitrile, or the like, and may include but is not limited to a combination of one or more of styrene rubber, polyacrylic acid, acrylic acid, styrene, allylbenzene, butadiene, acrylonitrile, acrylic acid, acrylamide, methyl acrylate, ethyl acrylate, and methyl methacrylate.

In the lithium-ion battery provided in the present invention, a mass percent of the binder in the positive electrode active substance layer may be 0.3% to 5%, 0.5% to 3%, 0.3% to 0.5%, 0.5% to 1%, 1% to 1.5%, 1.5% to 2%, 2% to 3%, 3% to 4%, or 4% to 5%. The binder content in the positive electrode active substance layer can typically be adjusted by changing the weight of the binder applied on the surface of the active substance in a preparation process. A mass percent of the binder in the negative electrode active substance layer may be 0.5% to 8%, 0.8% to 5%, 0.5% to 0.6%, 0.6% to 0.8%, 0.8% to 1%, 1% to 1.5%, 1.5% to 2%, 2% to 3%, 3% to 4%, 4% to 5%, 5% to 6%, or 6% to 8%. The binder content in the negative electrode active substance layer can typically be adjusted by changing the weight of the binder applied on the surface of the active substance in a preparation process. The percentage of binder content in an active substance layer usually affects feasibility of an electrode preparation process and performance of a battery cell. An increase in the usage amount of the binder may cause the active substance to easily agglomerate, and leave the coating process prone to particle scratching and other production problems. In addition, an excessively high binder content increases diffusion resistance of ions of an electrode and deteriorates power performance of a battery cell. The binder content also affects cohesion of the electrode, and the cohesion affects adhesion between particles in the active substance layer. Excessively low cohesion causes poor adhesion between particles, and production problems such as easy powder shedding in a production process, deteriorating performance (such as capacity, power, and cycling) of the battery cell.

In the lithium-ion battery provided in the present invention, the positive electrode active substance may be various positive electrode active substances suitable for lithium-ion (secondary) batteries in the field. For example, it may include but is not limited to a layered lithium transition metal oxide with the chemical formula LiₐM₁-ₓM'ₓO₂ (where 0.9≤a≤1.1, 0≤x≤0.1, M is at least one of Co, Mn, and Ni, or M is selected from a combination of one or more of Co, Mn, Ni, and the like, and M' is a combination of one or more of Al, Mg, B, Zr, Si, Ti, Cr, Fe, V, Cu, Ca, Zn, Nb, Mo, Sr, Sb, W, Bi, and the like), and a lithium iron phosphate material with the chemical formula LiFe_{y}Mn_{1-y-z}M"_{z}PO₄/C_{b} (where b≥0, M" is selected from a combination of one or more of Cr, Mg, Ti, Al, Zn, W, Nb, and Zr, 0.1≤y≤1.0, and 0≤z≤0.9).

In the lithium-ion battery provided in the present invention, the negative electrode active substance may be various negative electrode active substances suitable for lithium-ion (secondary) batteries in the field. The negative electrode active substance is usually a material capable of accepting and releasing lithium ions. For example, the negative electrode active substance may include but is not limited to one or more of graphite, soft carbon, hard carbon, carbon fiber, a meso-carbon microbead, a silicon-based material, a tin-based material, lithium titanate, or other metals or the like that can form an alloy with lithium. The graphite may be selected from one or more of artificial graphite, natural graphite, and modified graphite, and the graphite may be further modified. There is no specific limitation on a modification method of graphite. Preferably, modification is performed by applying a coat on a surface of a graphite core, and more preferably, modification is performed through amorphous carbon coating. The silicon-based material may be selected from one or more of elemental silicon, a silicon-oxygen compound, a silicon-carbon composite, and a silicon alloy. The tin-based material may be selected from one or more of elemental tin, a tin oxide compound, and a tin alloy.

In the lithium-ion battery provided in the present invention, the positive electrode active substance layer and/or the negative electrode active substance layer may further include a conductive agent, and the conductive agent may be various conductive agents suitable for lithium-ion (secondary) batteries in the field. For example, it may include but is not limited to a combination of one or more of acetylene black, conductive carbon black, vapor grown carbon fiber (VGCF), a carbon nanotube (CNT), Ketjen black, and the like. A weight of the conductive agent may account for 1% to 10%, 1.5% to 5%, 1% to 1.5%, 1.5% to 2%, 2% to 3%, 3% to 5%, or 5% to 10% of a weight of each of the active substance layers.

In the lithium-ion battery provided in the present invention, the positive electrode current collector may typically be a layer. The positive electrode current collector may be typically a structure or a part that can collect current. The positive electrode current collector may be made of various materials suitable for serving as a positive electrode current collector for lithium-ion batteries in the field. For example, the positive electrode current collector may include but is not limited to metal foil, and more specifically, may include but is not limited to copper foil and aluminum foil.

In the lithium-ion battery provided in the present invention, the negative electrode current collector may typically be a layer. The negative electrode current collector is typically a structure or a part that collects current. The negative electrode current collector may be made of various materials suitable for serving as a negative electrode current collector for lithium-ion batteries in the field. For example, the negative electrode current collector may include but is not limited to metal foil, and more specifically, may include but is not limited to copper foil.

For the lithium-ion battery provided in the present invention, other components that can be used for lithium-ion batteries may further be included. For example, a battery separator, an electrolyte solution, an external electrode, tabs, a packaging shell, and the like may further be included. The separator may be made of various materials suitable for separators of lithium-ion (secondary) batteries in the field. For example, it may include but is not limited to a combination of one or more of polyethylene, polypropylene, polyvinylidene fluoride, kevlar, polyethylene terephthalate, polytetrafluoroethylene, polyacrylonitrile, polyimide, polyamide, polyester, and natural fibers. The electrolyte solution may be various electrolyte solutions suitable for lithium-ion (secondary) batteries in the field. For example, the electrolyte solution usually includes an electrolyte and a solvent, and the electrolyte may usually include a lithium salt and the like. More specifically, the lithium salt may be an inorganic lithium salt and/or an organic lithium salt or the like, and specifically, may include but is not limited to a combination of one or more of LiPF₆, LiBF₄, LiBOB, LiAsF₆, Li(CF₃SO₂)₂N, LiCF₃SO₃, and LiClO₄. For another example, a concentration of the electrolyte may be 0.8 mol/L to 1.3 mol/L. The solvent may be various solvents suitable for electrolyte solutions of lithium-ion batteries in the field, and the solvent of the electrolyte solution is usually a non-aqueous solvent, preferably, may be an organic solvent, and specifically, may include but is not limited to a combination of one or more of ethylene carbonate, propylene carbonate, butylene carbonate, pentene carbonate, dimethyl carbonate, diethyl carbonate, dipropyl carbonate, ethyl methyl carbonate, or halogenated derivatives thereof.

A second aspect of the present invention provides a method for preparing a lithium-ion battery, including at least one or more of the following steps:
(a) providing a positive electrode active substance uniformly coated with a binder; and
(b) providing a negative electrode active substance uniformly coated with a binder.

In the preparation methods provided in the present invention, those skilled in the art may choose a suitable method to provide an active substance uniformly coated with a binder. For example, the binder and the active substance may be mixed, desolvated, and ball milled, to provide active substance particles uniformly coated with the binder. For another example, in an active substance coated with a binder, a weight ratio of the binder to the active substance may be 1:90-100, 1:93-99, 1:90-93, 1:93-96, 1:96-99, or 1:99-100. For another example, the binder and the active substance may be mixed in the presence of a solvent, and the solvent is usually a good solvent for the binder, so that the binder can be uniformly applied on the surface of the active substance.

The preparation method provided in the present invention may further include: preparing an electrode plate by using an active substance coated with a binder. A method for preparing an electrode plate by using an active substance coated with a binder should be known to those skilled in the art. For example, the active substance coated with the binder may be mixed with other electrode materials (for example, a conductive agent), and a resulting mixture is applied on an electrode. An electrode coating process is usually carried out without a solvent to mainly eliminate the problem of binder floating caused by solvent volatilization. When a solvent is present, there may be secondary dissolution of the binder applied on the surface of the active substance into the solvent, hence slight floating of the binder.

A preparation method provided in the present invention may further include: preparing a lithium-ion battery by using an electrode plate. The method for preparing a lithium-ion battery by using an electrode plate should be known to those skilled in the art. For example, the positive electrode plate, a separator, and a negative electrode plate each may be a layer, so that they can be cut to a target size and then stacked in sequence; the stack can be further wound to a target size to form a battery core which can be further combined with an electrolyte solution to form a lithium-ion battery.

The following describes the embodiments of the present invention through specific examples, and those skilled in the art can easily understand other advantages and effects of the present invention from the content disclosed in this specification. The present invention may also be implemented or applied through other different specific embodiments, and various details in this specification can also be modified or changed based on different viewpoints and applications without departing from the spirit of the present invention.

It should be noted that processing devices or apparatuses not specifically noted in the following examples are all conventional devices or apparatuses in the art.

In addition, it should be understood that the one or more method steps mentioned in the present invention do not exclude that there may be other method steps before and after the combined steps or that other method steps may be inserted between these explicitly mentioned steps, unless otherwise specified. It should further be understood that the combination and connection relationship between one or more devices/apparatuses mentioned in the present invention do not exclude that there may be other devices/apparatuses before and after the combined devices/apparatuses or that other devices/apparatuses may be inserted between the two explicitly mentioned devices/apparatuses, unless otherwise specified. Moreover, unless otherwise specified, numbers of the method steps are merely a tool for identifying the method steps, but are not intended to limit the order of the method steps or to limit the implementable scope of the present invention. In the absence of substantial changes in the technical content, alteration or adjustment to their relative relationships shall also be considered as the implementable scope of the present invention.

A method for processing a binder and an active substance used in the examples is specifically as follows:

A cathode active substance LFP and a binder polyvinylidene fluoride (PVDF) were fully stirred in an N-methylpyrrolidone solvent system (for an amount of used solvents, a solid content was controlled at 70%; the binder part was calculated as a solid part in calculating the solid content, which applies in the following description) at a weight ratio of 98:2, with a stirring and mixing time of 60 min to 150 min, and a stirring line speed controlled to 4 m/min to 10 m/min. After being uniformly mixed, the mixed solution was filtered through three layers of filter papers to obtain a treated active substance. The treated active substance was then put in a vacuum oven of 45°C for drying for 24 h. After being dried, the treated active substance was transferred to a high-speed ball mill for ball milling, with a rotation speed controlled at 600 r/min. After ball milling for 12 h to 15 h, the active substance was a treated cathode active substance LFP with a binder content of 2% on its surface.

A cathode active substance LFP and a binder polyvinylidene fluoride (PVDF) were fully stirred in an N-methylpyrrolidone solvent system (for an amount of used solvents, a solid content was controlled at 70%) at a weight ratio of 95:5, with a stirring and mixing time of 60 min to 150 min, and a stirring line speed controlled to 4 m/min to 10 m/min. After being uniformly mixed, the mixed solution was filtered through three layers of filter papers to obtain a treated active substance. The treated active substance was then put in a vacuum oven of 45°C for drying for 24 h. After being dried, the treated active substance was transferred to a high-speed ball mill for ball milling, with a rotation speed controlled at 600 r/min. After ball milling for 12 h to 15 h, the active substance was a treated cathode active substance LFP with a binder content of 5% on its surface.

A cathode active substance LFP and a binder polyvinylidene fluoride (PVDF) were fully stirred in an N-methylpyrrolidone solvent system (for an amount of used solvents, a solid content was controlled at 70%) at a weight ratio of 90:10, with a stirring and mixing time of 60 min to 150 min, and a stirring line speed controlled to 4 m/min to 10 m/min. After being uniformly mixed, the mixed solution was filtered through three layers of filter papers to obtain a treated active substance. The treated active substance was then put in a vacuum oven of 45°C for drying for 24 h. After being dried, the treated active substance was transferred to a high-speed ball mill for ball milling, with a rotation speed controlled at 600 r/min. After ball milling for 12 h to 15 h, the active substance was a treated cathode active substance LFP with a binder content of 10% on its surface.

An anode active substance artificial graphite and a binder styrene-butadiene rubber (SBR) were fully stirred in a deionized water solvent system (for an amount of used solvents, a solid content was controlled at 50%) at a weight ratio of 95:5, with a stirring and mixing time of 60 min to 150 min, and a stirring line speed controlled to 4 m/min to 10 m/min. After being uniformly mixed, the mixed solution was filtered through three layers of filter papers to obtain a treated active substance. The treated active substance was then put in a vacuum oven of 45°C for drying for 24 h. After being dried, the treated active substance was transferred to a high-speed ball mill for ball milling, with a rotation speed controlled at 600 r/min. After ball milling for 12 h to 15 h, the active substance was a treated anode active substance artificial graphite with a binder content of 5% on its surface.

### Example 1

Treated LFP cathode electrode plate with a binder content of 5% on its surface (a weight per unit area of active substance is 300 mg/1540.25 mm²) without a solvent system:

An active substance lithium iron phosphate LiFePO₄ and conductive carbon black Super-P were fully stirred at a weight ratio of 97:3, with a stirring and mixing time of 60 min to 150 min, and a stirring line speed controlled to 4 m/min to 10 m/min, where a surface of the active substance was treated with a 5% binder. After being uniformly mixed, the slurry was transferred into a spray gun with a heating function, with temperature of the heating spray gun controlled to 120°C. The high-temperature slurry was then sprayed onto a surface of an aluminum foil substrate, with a coating weight controlled to 300 mg/1540.25 mm². Cold pressing, slitting, and cutting were performed to obtain a cathode electrode plate.

### Example 2

Treated LFP cathode electrode plate with a binder content of 2% on its surface (a weight per unit area of active substance is 360 mg/1540.25 mm²) without a solvent system:

An active substance lithium iron phosphate LiFePO₄ and conductive carbon black Super-P were fully stirred at a weight ratio of 97:3, with a stirring and mixing time of 60 min to 150 min, and a stirring line speed controlled to 4 m/min to 10 m/min, where a surface of the active substance was treated with a 2% binder. After being uniformly mixed, the slurry was transferred into a spray gun with a heating function, with temperature of the heating spray gun controlled to 120°C. The high-temperature slurry was then sprayed onto a surface of an aluminum foil substrate, with a coating weight controlled to 360 mg/1540.25 mm². Cold pressing, slitting, and cutting were performed to obtain a cathode electrode plate.

### Example 3

Treated LFP cathode electrode plate with a binder content of 5% on its surface (a weight per unit area of active substance is 360 mg/1540.25 mm²) without a solvent system:

An active substance lithium iron phosphate LiFePO₄ and conductive carbon black Super-P were fully stirred at a weight ratio of 97:3, with a stirring and mixing time of 60 min to 150 min, and a stirring line speed controlled to 4 m/min to 10 m/min, where a surface of the active substance was treated with a 5% binder. After being uniformly mixed, the slurry was transferred into a spray gun with a heating function, with temperature of the heating spray gun controlled to 120°C. The high-temperature slurry was then sprayed onto a surface of an aluminum foil substrate, with a coating weight controlled to 360 mg/1540.25 mm². Cold pressing, slitting, and cutting were performed to obtain a cathode electrode plate.

### Example 4

Treated LFP cathode electrode plate with a binder content of 10% on its surface (a weight per unit area of active substance is 360 mg/1540.25 mm²) without a solvent system:

An active substance lithium iron phosphate LiFePO₄ and conductive carbon black Super-P were fully stirred at a weight ratio of 97:3, with a stirring and mixing time of 60 min to 150 min, and a stirring line speed controlled to 4 m/min to 10 m/min, where a surface of the active substance was treated with a 10% binder. After being uniformly mixed, the slurry was transferred into a spray gun with a heating function, with temperature of the heating spray gun controlled to 120°C. The high-temperature slurry was then sprayed onto a surface of an aluminum foil substrate, with a coating weight controlled to 360 mg/1540.25 mm². Cold pressing, slitting, and cutting were performed to obtain a cathode electrode plate.

### Example 5

Treated LFP cathode electrode plate with a binder content of 5% on its surface (a weight per unit area of active substance is 360 mg/1540.25 mm²) with a solvent system:

An active substance lithium iron phosphate LiFePO₄ and conductive carbon black Super-P were fully stirred in an N-methylpyrrolidone solvent system at a weight ratio of 97:3, with a stirring and mixing time of 60 min to 150 min, and a stirring line speed controlled to 4 m/min to 10 m/min, where a surface of the active substance was treated with a 5% binder. After being uniformly mixed, the slurry was uniformly applied on a surface of an aluminum foil substrate, with a coating weight controlled to 360 mg/1540.25 mm². Drying, slitting, and cutting were performed to obtain a cathode electrode plate.

### Example 6

Treated artificial graphite anode electrode plate with a binder content of 5% on its surface (a weight per unit area of active substance is 150 mg/1540.25 mm²) without a solvent system:

An active substance artificial graphite and conductive carbon black Super-P were fully stirred and mixed at a weight ratio of 98:2, where a surface of the active substance was treated with a 5% binder. The slurry was then transferred into a spray gun with a heating function, with temperature of the heating spray gun controlled to 80°C. The high-temperature slurry was then sprayed onto Cu foil. Cooling, cold pressing, slitting, and cutting were then performed to obtain an anode electrode plate.

### Example 7

Treated artificial graphite anode electrode plate with a binder content of 5% on its surface (a weight per unit area of active substance is 180 mg/1540.25 mm²) without a solvent system:

An active substance artificial graphite and conductive carbon black Super-P were fully stirred and mixed at a weight ratio of 98:2, where a surface of the active substance was treated with a 5% binder. The slurry was then transferred into a spray gun with a heating function, with temperature of the heating spray gun controlled to 80°C. The high-temperature slurry was then sprayed onto Cu foil. Cooling, cold pressing, slitting, and cutting were then performed to obtain an anode electrode plate.

### Example 8

Treated artificial graphite anode electrode plate with a binder content of 5% on its surface (a weight per unit area of active substance is 180 mg/1540.25 mm²) with a solvent system:

An active substance artificial graphite and conductive carbon black Super-P were fully stirred and mixed in a deionized water solvent system at a weight ratio of 98:2, where a surface of the active substance was treated with a 5% binder. The mixture was then applied on Cu foil. Cold pressing, slitting, and cutting were then performed to obtain an anode electrode plate.

### Comparative Example 1

Untreated LFP cathode electrode plate (a weight per unit area of active substance is 300 mg/1540.25 mm²) with a solvent system:

An active substance lithium iron phosphate LiFePO₄, conductive carbon black Super-P, and a binder polyvinylidene fluoride (PVDF) were fully stirred in an N-methylpyrrolidone solvent system at a weight ratio of 94:3:3, with a stirring and mixing time of 60 min to 150 min, and a stirring line speed controlled to 4 m/min to 10 m/min. After being uniformly mixed, the slurry was applied on an Al foil substrate, with a coating weight controlled to 300 mg/1540.25 mm². Drying, cold pressing, slitting, and cutting were performed to obtain a cathode electrode plate.

### Comparative Example 2

Untreated LFP cathode electrode plate (a weight per unit area of active substance is 360 mg/1540.25 mm²) with a solvent system:

An active substance lithium iron phosphate LiFePO4, conductive carbon black Super-P, and a binder polyvinylidene fluoride (PVDF) were fully stirred in an N-methylpyrrolidone solvent system at a weight ratio of 94:3:3, with a stirring and mixing time of 60 min to 150 min, and a stirring line speed controlled to 4 m/min to 10 m/min. After being uniformly mixed, the slurry was applied on an Al foil substrate, with a coating weight controlled to 360 mg/1540.25 mm². Drying, cold pressing, slitting, and cutting were performed to obtain a cathode electrode plate.

### Comparative Example 3

Untreated artificial graphite anode electrode plate (a weight per unit area of active substance is 150 mg/1540.25 mm²) with a solvent system:

An active substance artificial graphite, conductive carbon black Super-P, a binder styrene-butadiene rubber (SBR), and a thickener sodium carboxymethyl cellulose (CMC) were fully stirred and uniformly mixed in a deionized water solvent system at a weight ratio of 96:1:2:1, and then the mixture was applied onto Cu foil, with a coating weight controlled to 150 mg/1540.25 mm². Drying, cold pressing, slitting, and cutting were performed to obtain an anode electrode plate.

### Comparative Example 4

Untreated artificial graphite anode electrode plate (a weight per unit area of active substance is 180 mg/1540.25 mm²) with a solvent system:

An active substance artificial graphite, conductive carbon black Super-P, a binder styrene-butadiene rubber (SBR), and a thickener sodium carboxymethyl cellulose (CMC) were fully stirred and uniformly mixed in a deionized water solvent system at a weight ratio of 96:1:2:1, and then the mixture was applied onto Cu foil, with a coating weight controlled to 180 mg/1540.25 mm². Drying, cold pressing, slitting, and cutting were performed to obtain an anode electrode plate.

### Appearance characterization of the electrode plate

The cathode electrode plate in each example and each comparative example was taken to perform an appearance characterization test on the electrode plate. Five parallel samples were taken in each example and comparative example, with the electrode plate of 100 mm in width and 1000 mm in length. A measuring scale was used to test the largest width and largest crack length of cracks on a surface of the electrode plate, and a quantity of the cracks was recorded. Table 1 shows appearance characterization test data of electrode plates.

**Table 1**

| | Appearance characterization of the electrode plate (100 mm in width and 1000 mm in length) | | |
|---|---|---|---|
| | Quantity of cracks | Largest crack length (mm) | Largest crack width (mm) |
| Example 1-1 | 0 | / | / |
| Example 1-2 | 0 | / | / |
| Example 1-3 | 0 | / | / |
| Example 1-4 | 0 | / | / |
| Example 1-5 | 0 | / | / |
| Example 2-1 | 0 | / | / |
| Example 2-2 | 0 | / | / |
| Example 2-3 | 0 | / | / |
| Example 2-4 | 0 | / | / |
| Example 2-5 | 0 | / | / |
| Example 3-1 | 0 | / | / |
| Example 3-2 | 0 | / | / |
| Example 3-3 | 0 | / | / |
| Example 3-4 | 0 | / | / |
| Example 3-5 | 0 | / | / |
| Example 4-1 | 0 | / | / |
| Example 4-2 | 0 | / | / |
| Example 4-3 | 0 | / | / |
| Example 4-4 | 0 | / | / |
| Example 4-5 | 0 | / | / |
| Example 5-1 | 0 | / | / |
| Example 5-2 | 0 | / | / |
| Example 5-3 | 0 | / | / |
| Example 5-4 | 0 | / | / |
| Example 5-5 | 0 | / | / |
| Example 6-1 | 0 | / | / |
| Example 6-2 | 0 | / | / |
| Example 6-3 | 0 | / | / |
| Example 6-4 | 0 | / | / |
| Example 6-5 | 0 | / | / |
| Example 7-1 | 0 | / | / |
| Example 7-2 | 0 | / | / |
| Example 7-3 | 0 | / | / |
| Example 7-4 | 0 | / | / |
| Example 7-5 | 0 | / | / |
| Example 8-1 | 0 | / | / |
| Example 8-2 | 0 | / | / |
| Example 8-3 | 0 | / | / |
| Example 8-4 | 0 | / | / |
| Example 8-5 | 0 | / | / |
| Comparative Example 1-1 | 0 | / | / |
| Comparative Example 1-2 | 0 | / | / |
| Comparative Example 1-3 | 0 | / | / |
| Comparative Example 1-4 | 0 | / | / |
| Comparative Example 1-5 | 0 | / | / |
| Comparative Example 2-1 | 12 | 6.3 | 0.9 |
| Comparative Example 2-2 | 10 | 8.7 | 0.7 |
| Comparative Example 2-3 | 7 | 5.9 | 0.7 |
| Comparative Example 2-4 | 9 | 9.0 | 0.9 |
| Comparative Example 2-5 | 13 | 8.5 | 0.8 |
| Comparative Example 3-1 | 0 | / | / |
| Comparative Example 3-2 | 0 | / | / |
| Comparative Example 3-3 | 0 | / | / |
| Comparative Example 3-4 | 0 | / | / |
| Comparative Example 3-5 | 0 | / | / |
| Comparative Example 4-1 | 2.7 | 1.7 | 0.2 |
| Comparative Example 4-2 | 3.2 | 1.6 | 0.2 |
| Comparative Example 4-3 | 2.6 | 2.2 | 0.2 |
| Comparative Example 4-4 | 1.8 | 1.5 | 0.2 |
| Comparative Example 4-5 | 2.2 | 2.3 | 0.2 |

It can be learned from Table 1 that compared with the comparative examples, cracking on the surface of electrode plates made by using a solvent-free system with a high weight per unit area of active substance (greater than or equal to 360 mg/1540.25 mm² at the cathode, or greater than or equal to 180 mg/1540.25 mm² at the anode) in the examples was significantly alleviated, with basically no cracking, a degree of cracking of the electrode plates was not related to a percentage of binder used for treatment on a surface of the active substance, and the use of a solvent-free system at both the cathode and the anode could well reduce cracking. In addition, for a non-high weight per unit area of active substance (less than 360 mg/1540.25 mm² at the cathode, or less than 180 mg/1540.25 mm² at the anode), there was no cracking for both a solvent-free system and a solvent system. However, for electrodes made by using a solvent system with a high weight per unit area of active substance (greater than or equal to 360 mg/1540.25 mm² at the cathode, or greater than or equal to 180 mg/1540.25 mm² at the anode), cracking occurred at both the cathode and the anode. In addition, for electrode plates prepared by using active substances treated with a binder, there was no cracking, regardless of whether there was a solvent.

### Porosity test on the electrode plate

A cathode electrode plate in each example and comparative example was taken to test a porosity of the electrode plate, a true density tester was used for test, and porosity test data was recorded. Table 2 shows porosity test data of electrode plates.

**Table 2**

| No. | Porosity |
|---|---|
| Example 1-1 | 35.3% |
| Example 1-2 | 36.2% |
| Example 1-3 | 36.6% |
| Example 2-1 | 32.3% |
| Example 2-2 | 32.9% |
| Example 2-3 | 33.1% |
| Example 3-1 | 34.3% |
| Example 3-2 | 33.9% |
| Example 3-3 | 34.6% |
| Example 4-1 | 33.0% |
| Example 4-2 | 32.6% |
| Example 4-3 | 33.4% |
| Example 5-1 | 32.9% |
| Example 5-2 | 33.8% |
| Example 5-3 | 34.2% |
| Example 6-1 | 40.8% |
| Example 6-2 | 40.4% |
| Example 6-3 | 41.1% |
| Example 7-1 | 36.5% |
| Example 7-2 | 36.1% |
| Example 7-3 | 36.9% |
| Example 8-1 | 36.4% |
| Example 8-2 | 37.3% |
| Example 8-3 | 37.7% |
| Comparative Example 1-1 | 28.9% |
| Comparative Example 1-2 | 29.8% |
| Comparative Example 1-3 | 30.2% |
| Comparative Example 2-1 | 25.9% |
| Comparative Example 2-2 | 26.5% |
| Comparative Example 2-3 | 26.7% |
| Comparative Example 3-1 | 34.4% |
| Comparative Example 3-2 | 34.0% |
| Comparative Example 3-3 | 34.7% |
| Comparative Example 4-1 | 30.1% |
| Comparative Example 4-2 | 29.7% |
| Comparative Example 4-3 | 30.5% |

It can be learned from Table 2 that compared with the comparative examples, under the same weight per unit area of active substance, porosities of both cathodes and anodes in the examples were greatly improved. In addition, it can be learned that for electrode plates made by using active substances with treating binders on their surfaces, percentages of treating binders on the surfaces did not affect porosities of the electrode plates. In addition, for electrode plates made by using active substances with treating binders on their surfaces, porosities of the electrode plates were all improved, regardless of whether a solvent system or a solvent-free system was used. This indicates the reason of the porosity improvement of the electrode plates: After the binder is applied on the surface of the active substance, there was no need to add any binder during stirring. Then, in a process of drying the electrode plate, the binder did not float up with solvent volatilization, regardless of whether there was a solvent or not. This prevents pores from being blocked by the binder accumulated on the surface of the electrode plate.

### Cohesion test of the electrode plate

A cathode electrode plate in each example and comparative example was taken to test cohesion of the electrode plate. The electrode plate was cut into a long electrode plate with a width of about 25 mm and a length of about 100 mm. The electrode plate was made into close contact with a stainless steel plate wiped up with alcohol, and a green glue tape with a width of 20 mm was tightly attached to a surface of the electrode plate. One end of the tape was lifted up and clamped on the upper end of a Wanli tensile machine, and the stainless steel plate with the electrode plate was clamped on the lower end of the Wanli tensile machine. Then the Wanli tensile machine was used to perform the test, with a stretching speed controlled at 5 mm/min and a stretching distance of 20 mm, and tensile test data in the stretching process was recorded. Table 3 shows cohesion test data of the electrode plate.

**Table 3**

| No. | Cohesion (N/m) |
|---|---|
| Example 1-1 | 42.4 |
| Example 1-2 | 43.4 |
| Example 1-3 | 43.9 |
| Example 2-1 | 38.8 |
| Example 2-2 | 39.5 |
| Example 2-3 | 39.7 |
| Example 3-1 | 41.2 |
| Example 3-2 | 40.7 |
| Example 3-3 | 41.5 |
| Example 4-1 | 46.2 |
| Example 4-2 | 45.6 |
| Example 4-3 | 46.8 |
| Example 5-1 | 39.5 |
| Example 5-2 | 40.6 |
| Example 5-3 | 41.0 |
| Example 6-1 | 49.0 |
| Example 6-2 | 48.5 |
| Example 6-3 | 49.3 |
| Example 7-1 | 43.8 |
| Example 7-2 | 43.3 |
| Example 7-3 | 44.3 |
| Example 8-1 | 43.7 |
| Example 8-2 | 44.8 |
| Example 8-3 | 45.2 |
| Comparative Example 1-1 | 29.5 |
| Comparative Example 1-2 | 30.4 |
| Comparative Example 1-3 | 30.8 |
| Comparative Example 2-1 | 26.4 |
| Comparative Example 2-2 | 27.0 |
| Comparative Example 2-3 | 27.2 |
| Comparative Example 3-1 | 35.1 |
| Comparative Example 3-2 | 34.7 |
| Comparative Example 3-3 | 35.4 |
| Comparative Example 4-1 | 30.7 |
| Comparative Example 4-2 | 30.3 |
| Comparative Example 4-3 | 31.1 |

It can be learned from Table 3 that compared with the comparative examples, under the same weight per unit area of active substance, cohesion of both the cathode and anode in the examples was greatly improved. In addition, it can be learned that for electrode plates made by using active substances with treating binders on their surfaces, higher percentages of treating binders on the surfaces indicated greater cohesion of the electrode plates. In addition, for electrode plates made by using active substances with treating binders on their surfaces, cohesion of the electrode plates was all increased, regardless of whether a solvent system or a solvent-free system was used. The cohesion of the electrode plates mainly came from adhesion between active substances. Therefore, in a process of drying the electrode plate, the binder did not float up with solvent volatilization, regardless of whether there was a solvent or not, which avoids decreased cohesion due to enriched binder on the surface of the electrode plate but an excessively small amount of binder under the surface. In addition, a higher percentage of treating binder on the surface indicated that particles were bound by more binder, hence greater cohesion.

### C-rate performance test result:

### Preparation of a battery cell:

A three-layered PE/PP/PE porous polymer film was used as a separator.

A cathode electrode plate, a separator, and an anode electrode plate were wound in order to make the separator located between a cathode and an anode for isolation, and control misalignment between the cathode and the anode, and between the separator and each of the cathode and the anode. A bare cell was obtained after winding. The qualified bare cell was welded to a top cover through tabs, packaged into a shell, and dried.

For the battery cells in the examples and comparative examples, the lithium-ion batteries were charged and discharged under the same conditions through the following steps to test power performance and cycle performance of the examples and the comparative examples.

### Power performance test:

At room temperature, the prepared lithium-ion battery was charged and discharged for the first time at a current of 0.5 C (that is, current at which theoretical capacity was completely discharged within 2 h). The charging is constant-current or constant-voltage charging, with an end voltage of 3.65 V, a cut-off current of 0.05 C, and an end-of-discharge voltage of 2.5 V. Then, the battery was left to rest for 24 h and charged to 3.65 V at a constant current and voltage of 0.5 C. Then, the fully charged battery was discharged respectively at a current of 1 C/2 C/3 C/5 C, with an end-of-discharge voltage of 2.5 V in all cases. Discharge capacities under different C-rate currents were recorded to calculate discharge capacity ratios under different C-rates. C-rate capacity ratio = Discharge capacity under this rate/Discharge capacity at 0.5 C. Table 4 shows test results.

**Table 4**

| | C-rate discharge capacity ratio (%) | | | |
|---|---|---|---|---|
| C-rate current | 0.5C | 1C | 2C | 3C |
| Example 1-1 | 100 | 98.0 | 97.5 | 95.8 |
| Example 1-2 | 100 | 98.2 | 97.0 | 96.2 |
| Example 1-3 | 100 | 99.0 | 97.3 | 95.6 |
| Example 2-1 | 100 | 97.4 | 95.4 | 93.7 |
| Example 2-2 | 100 | 97.0 | 95.4 | 93.7 |
| Example 2-3 | 100 | 96.7 | 94.2 | 92.5 |
| Example 3-1 | 100 | 97.2 | 94.7 | 92.9 |
| Example 3-2 | 100 | 96.5 | 94.0 | 92.3 |
| Example 3-3 | 100 | 96.8 | 95.2 | 93.5 |
| Example 4-1 | 100 | 96.4 | 94.9 | 93.2 |
| Example 4-2 | 100 | 96.9 | 95.3 | 92.6 |
| Example 4-3 | 100 | 97.2 | 95.4 | 92.7 |
| Example 5-1 | 100 | 97.1 | 94.4 | 92.7 |
| Example 5-2 | 100 | 97.4 | 94.8 | 92.0 |
| Example 5-3 | 100 | 96.4 | 93.8 | 93.0 |
| Example 6-1 | 100 | 98.3 | 97.8 | 96.1 |
| Example 6-2 | 100 | 98.5 | 97.3 | 96.5 |
| Example 6-3 | 100 | 99.3 | 97.6 | 95.9 |
| Example 7-1 | 100 | 97.7 | 95.7 | 94.0 |
| Example 7-2 | 100 | 97.3 | 95.7 | 94.0 |
| Example 7-3 | 100 | 97.0 | 94.5 | 92.8 |
| Example 8-1 | 100 | 97.5 | 94.9 | 93.2 |
| Example 8-2 | 100 | 96.8 | 94.2 | 92.6 |
| Example 8-3 | 100 | 97.0 | 95.5 | 93.8 |
| Comparative Example 1-1 | 100 | 95.0 | 94.6 | 92.9 |
| Comparative Example 1-2 | 100 | 95.3 | 94.1 | 93.3 |
| Comparative Example 1-3 | 100 | 96.0 | 94.3 | 92.7 |
| Comparative Example 2-1 | 100 | 94.5 | 92.6 | 90.9 |
| Comparative Example 2-2 | 100 | 94.1 | 92.6 | 90.9 |
| Comparative Example 2-3 | 100 | 93.8 | 91.4 | 89.7 |
| Comparative Example 3-1 | 100 | 95.3 | 94.9 | 93.2 |
| Comparative Example 3-2 | 100 | 95.5 | 94.4 | 93.6 |
| Comparative Example 3-3 | 100 | 96.3 | 94.6 | 93.0 |
| Comparative Example 4-1 | 100 | 94.8 | 92.8 | 91.2 |
| Comparative Example 4-2 | 100 | 94.4 | 92.8 | 91.2 |
| Comparative Example 4-3 | 100 | 94.1 | 91.6 | 90.0 |

It can be learned from results of the examples and comparative examples that compared with the comparative examples, C-rate discharge capacities of both battery cells made by using a solvent system and battery cells made by using a solvent-free system in the examples were greatly increased. This is because power performance improvement is mainly due to porosity improvement of electrode plates. To be specific, there was no need to add any binder after a binder is applied on the surfaces of the active substance, which prevents the binder from floating up with a solvent and blocking pores, thereby improving the pore structure on the electrode surface, and facilitating infiltration of an electrolyte solution and rapid diffusion of lithium ions to improve power performance. For battery cells made by using electrode plates with a high weight per unit area of active substance (greater than or equal to 360 mg/1540.25 mm² at a cathode, and greater than or equal to 180 mg/1540.25 mm² at an anode), this can effectively alleviate power performance deterioration caused by an increase in weight per unit area of active substance, so that power performance of the battery cells can still meet requirements after the weight per unit area of active substance is increased by 20%.

### Cycle performance test:

At room temperature, the prepared lithium-ion battery was charged and discharged for the first time at a current of 0.5 C (that is, a current value at which the battery completely discharges its theoretical capacity within 2 h). The charging is constant-current or constant-voltage charging, with an end voltage of 3.65 V, a cut-off current of 0.05 C, and an end-of-discharge voltage of 2.5 V. Then, the battery was left for 24 h. Charge and discharge test was performed first at the same conditions: The battery was constant-current or constant-voltage charged at a current of 1 C, with an end voltage of 3.65 V and a cut-off current of 0.05 C, and discharged at a current of 1 C, with an end-of-discharge voltage of 2.5 V. A discharge capacity Cb of the battery cell in BOL (Before of life), that is, the discharge capacity after the first cycle, was recorded. Then, cycle life test was performed in the following test conditions: 1 C/1 C cycling under room temperature, with a voltage ranging from 2.5 V to 3.65 V. The battery was stood for 5 minutes in the middle stage of the test, and a discharge process capacity Ce was recorded in the cycling process. A ratio of Ce to Cb was a capacity retention rate in the cycling process, and was used to determine a fade rate of the cycle life. Table 5 shows cycle performance test results.

**Table 5**

| | Cycle performance Capacity retention rate of the 3000^{th} cycle |
|---|---|
| Example 1-1 | 86.1% |
| Example 1-2 | 85.2% |
| Example 1-3 | 84.1% |
| Example 2-1 | 81.5% |
| Example 2-2 | 80.6% |
| Example 2-3 | 79.5% |
| Example 3-1 | 81.7% |
| Example 3-2 | 79.3% |
| Example 3-3 | 80.4% |
| Example 4-1 | 80.1% |
| Example 4-2 | 81.4% |
| Example 4-3 | 81.5% |
| Example 5-1 | 82.4% |
| Example 5-2 | 81.8% |
| Example 5-3 | 81.8% |
| Example 6-1 | 85.2% |
| Example 6-2 | 84.3% |
| Example 6-3 | 84.2% |
| Example 7-1 | 80.0% |
| Example 7-2 | 80.9% |
| Example 7-3 | 81.5% |
| Example 8-1 | 81.5% |
| Example 8-2 | 80.6% |
| Example 8-3 | 80.7% |
| Comparative Example 1-1 | 81.2% |
| Comparative Example 1-2 | 81.4% |
| Comparative Example 1-3 | 79.4% |
| Comparative Example 2-1 | 72.1% |
| Comparative Example 2-2 | 71.7% |
| Comparative Example 2-3 | 72.8% |
| Comparative Example 3-1 | 80.4% |
| Comparative Example 3-2 | 80.6% |
| Comparative Example 3-3 | 78.6% |
| Comparative Example 4-1 | 71.3% |
| Comparative Example 4-2 | 71.0% |
| Comparative Example 4-3 | 72.0% |

It can be clearly learned from experiment results of the examples and comparative examples that in the examples, cycle performance of both battery cells made by using a solvent system and battery cells made by using a solvent-free system was greatly improved. As explained above, cycle performance improvement was due to treatment of the active substance, because the treatment avoided that the binder was enriched on a surface of an electrode plate and then blocked pores. A good pore structure on the surface could ensure infiltration and storage of an electrolyte solution of an electrode plate, and the electrode plate still contained sufficient electrolyte solution in the cycling process, thereby ensuring normal migration of lithium ions, and improving the cycle performance. For battery cells made by using electrode plates with a high weight per unit area of active substance (greater than or equal to 360 mg/1540.25 mm² at a cathode, and greater than or equal to 180 mg/1540.25 mm² at an anode), this can effectively alleviate cycle performance deterioration caused by an increase in weight per unit area of active substance, so that cycle performance of the battery cells can still meet requirements after the weight per unit area of active substance is increased by 20%.

In conclusion, the present invention effectively overcomes various shortcomings in the prior art and has high industrial utilization value.

The foregoing embodiments only exemplarily illustrate the principles and effects of the present invention, and are not intended to limit the present invention. Any person familiar with this technology can make modifications or alterations to the foregoing embodiments without departing from the spirit and scope of the present invention. Therefore, all equivalent modifications or alterations made by a person of ordinary skill in the technical field without departing from the spirit and technical ideas disclosed in the present invention shall still fall within the claims of the present invention.

## Claims

1. A lithium-ion battery, comprising a positive electrode plate and a negative electrode plate, wherein the positive electrode plate comprises a positive electrode current collector and a positive electrode active substance layer on at least one surface of the positive electrode current collector, the negative electrode plate comprises a negative electrode current collector and a negative electrode active substance layer on at least one surface of the negative electrode current collector, the positive electrode active substance layer contains a binder, the binder in the positive electrode active substance layer is uniformly distributed in a thickness direction of the active substance layer, and a weight per unit area of active substance of the positive electrode active substance layer is 360 mg/1540.25 mm² or more.

2. The lithium-ion battery according to claim 1, **characterized in that** cohesion of the positive electrode active substance layer is 30 to 50 N/m, and preferably, 35 to 45 N/m.

3. The lithium-ion battery according to claim 1, **characterized in that** the positive electrode active substance layer is of a one-layer or multi-layer structure.

4. The lithium-ion battery according to claim 1, **characterized in that** when the positive electrode active substance is of a multi-layer structure, at least some of the layers have a same type of binder, and preferably, all the layers have a same type of binder.

5. The lithium-ion battery according to claim 1, **characterized in that** the binder is selected from a combination of one or more of polyvinyl alcohol, polyurethane, polyacrylate, polyvinylidene fluoride, styrene-butadiene rubber, epoxy resin, vinyl acetate resin, and chlorinated rubber, and a mass percent of the binder is 0.3% to 5%, and preferably, 0.5% to 3%.

6. The lithium-ion battery according to claim 1, **characterized in that** the positive electrode active substance layer comprises a positive electrode active substance, wherein the positive electrode active substance is selected from a combination of one or more of a layered lithium transition metal oxide with the chemical formula LiₐM₁₋ₓM'ₓO₂ and a lithium iron phosphate material with the chemical formula LiFe_{y}Mn_{1-y-z-}M"_{z}PO₄/C, wherein 0.9≤a≤1.1, 0≤x≤0.1, 0.1≤y≤1.0, 0≤z≤0.9, M is selected from a combination of one or more of Co, Mn, and Ni, M' is selected from at least a combination of one or more of Al, Mg, B, Zr, Si, Ti, Cr, Fe, V, Cu, Ca, Zn, Nb, Mo, Sr, Sb, W, and Bi, and M" is selected from a combination of one or more of Cr, Mg, Ti, Al, Zn, W, Nb, and Zr.

7. A lithium-ion battery, comprising a positive electrode plate and a negative electrode plate, wherein the positive electrode plate comprises a positive electrode current collector and a positive electrode active substance layer on at least one surface of the positive electrode current collector, the negative electrode plate comprises a negative electrode current collector and a negative electrode active substance layer on at least one surface of the negative electrode current collector, the negative electrode active substance layer contains a binder, the binder in the negative electrode active substance layer is uniformly distributed in a thickness direction of the active substance layer, and a weight per unit area of active substance of the negative electrode active substance layer is 180 mg/1540.25 mm² or more.

8. The lithium-ion battery according to claim 7, **characterized in that** cohesion of the negative electrode active substance layer is 40 to 60 N/m, and preferably, 45 to 55 N/m.

9. The lithium-ion battery according to claim 7, **characterized in that** the negative electrode active substance layer is of a one-layer or multi-layer structure.

10. The lithium-ion battery according to claim 7, **characterized in that** when the negative electrode active substance is of a multi-layer structure, at least some of the layers have a same type of binder, and preferably, all the layers have a same type of binder.

11. The lithium-ion battery according to claim 7, **characterized in that** the binder is selected from a combination of one or more of styrene rubber, polyacrylic acid, acrylic acid, styrene, allylbenzene, butadiene, acrylonitrile, acrylic acid, acrylamide, methyl acrylate, ethyl acrylate, and methyl methacrylate, and a mass percent of the binder is 0.5% to 8%, and preferably, 0.8% to 5%.

12. The lithium-ion battery according to claim 7, **characterized in that** the negative electrode active substance layer comprises a negative electrode active substance, which is selected from a combination of one or more of graphite, soft carbon, hard carbon, carbon fiber, a meso-carbon microbead, a silicon-based material, a tin-based material, and lithium titanate.

13. A method for preparing a lithium-ion battery, comprising at least one or more of the following steps:
(a) providing a positive electrode active substance uniformly coated with the binder in claim 5; and
(b) providing a negative electrode active substance uniformly coated with the binder in claim 11.
